# EUROPÄISCHE PATENTSCHRIFT

(11) **EP 2 574 146 B1**
(45) Veröffentlichungstag und Bekanntmachung des Hinweises auf die Patenterteilung: **09.11.2016**
(21) Anmeldenummer: 12184698.4
(22) Anmeldetag: 17.09.2012
(51) Int. Cl.: H05B 6/12

(54) **Induktionsheizeinrichtung und Induktionskochfeld mit mehreren solcher Induktionsheizeinrichtungen**
Induction heating device and induction hob with several such induction heating facilities
Dispositif de chauffage à induction et champ de cuisson à induction avec plusieurs dispositifs de chauffage à induction de ce type

(30) Priorität: 21.09.2011 DE 102011083125
(43) Veröffentlichungstag der Anmeldung: 27.03.2013
(73) Patentinhaber: E.G.O. Elektro-Gerätebau GmbH, 75038 Oberderdingen (DE)
(72) Erfinder: Stöffler, Michael, 75433 Maulbronn (DE); Stadtmüller, Sebastian, 76698 Ubstadt (DE)
(74) Vertreter: Patentanwälte Ruff, Wilhelm, Beier, Dauster & Partner mbB

(56) Entgegenhaltungen:
- EP-A1- 0 808 080
- CH-A5- 592 997
- DE-A1- 19 538 719
- DE-C- 917 204

## Beschreibung

### Anwendungsgebiet und Stand der Technik

Die Erfindung betrifft ein Induktionskochfeld mit mindestens zwei Induktionsspulen.

Aus der DE 202006016551 U1 ist es bekannt, mehrere Induktionsspulen benachbart zueinander anzuordnen. So können sie eine variabel vergrößerbare Kochstelle bzw. induktionsbeheizte Kochfläche bilden.

Aus der EP 0 808 080 A1 sind ein Induktionskochfeld und Induktionsspulen zum induktiven Kochen bekannt. Eine Induktionsspule kann unterschiedlich ausgebildet sein, wobei sie in einer Ausgestaltung in vier gleichgroße bzw. identische Kreissektoren unterteilt ist. Jeder der Kreissektoren bildet eine Art Viertelkreis. Dabei sind jeweils zwei benachbarte Segmente in Reihe geschaltet, so dass insgesamt die Induktionsspule auch nur mit einer oberen Hälfte, nur mit einer unteren Hälfte oder mit beiden Hälften betrieben werden kann.

### Aufgabe und Lösung

Der Erfindung liegt die Aufgabe zu Grunde, ein eingangs genanntes Induktionskochfeld zu schaffen, mit dem eine bessere Verwendbarkeit bei Anordnung mehrerer Induktionsspulen nebeneinander erreichbar ist.

Gelöst wird diese Aufgabe durch ein Induktionskochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass eine Induktionsheizeinrichtung eine Induktionsspule aufweist, die flach ist bzw. in einer Ebene verläuft. Die Induktionsspule weist mehrere umlaufende Spulenwindungen aus Spulendraht auf, beispielsweise 5 bis 25 Spulenwindungen. Besonders vorteilhaft besteht die Induktionsspule auch aus einem durchgehenden Spulendraht, also ohne Zwischenabgriffe odgl..

Die Außenkontur der Induktionsspule bzw. der äußersten Spulenwindung, vorteilhaft auch mehr als nur der äußersten Spulenwindung, weist eine angenäherte Trapezform auf. Sie weist zwei gegenüberliegende und in etwa gleiche lange Seiten auf und dazwischen zwei kurze Seiten, die jedoch unterschiedlich lang sind für die Trapezform. Die langen Seiten sind vorteilhaft im Wesentlichen gerade ausgebildet. Die kurzen Seiten sind vorteilhaft leicht nach außen gewölbt, zumindest die kürzere kurze Seite.

Durch diese Trapezform der Induktionsspule und somit des wesentlichen Teils der Induktionsheizeinrichtung ist es möglich, mit einer einzigen Art von Induktionsspule bzw. Induktionsheizeinrichtung, die als modulare Baueinheit eine solche Induktionsspule aufweist, durch unterschiedliche Anordnungen aneinander bzw. nebeneinander unterschiedlich geformte induktiv beheizte Flächen bzw. Kochstellen zu schaffen. Bei den genannten rechteckigen Induktionsspulen aus dem Stand der Technik ist die Variabilität geringer bzw. eine größere Variabilität kann nur mit Induktionsspulen erreicht werden, die im Vergleich zu einem Topf, selbst einem kleinen Topf, relativ klein sind. Vorteilhafte Beispiele als Ausgestaltungen der Erfindung für unterschiedlich geformte induktiv beheizte Flächen bzw. Kochstellen werden nachfolgend noch genannt und erläutert.

In vorteilhafter Ausgestaltung der Erfindung ist die Induktionsspule im Wesentlichen spiegelsymmetrisch ausgebildet mit einer Spiegelachse, die zwischen den beiden langen Seiten der Induktionsspule verläuft. Eine solche Spiegelsymmetrie wird als vorteilhaft angesehen bzgl. einfacherer Herstellung der Induktionsspule sowie möglichst gleichmäßigen Verlaufs der Spulenwindungen und Aufbau des magnetischen Feldes der Induktionsspule im Betrieb.

In weiterer Ausgestaltung der Erfindung weisen mindestens eine, vorzugsweise zwei, Spulenwindungen einen eckigen Verlauf im Bereich der Ecken der Trapezform auf, wobei dies insbesondere die äußersten Spulenwindungen sind. Dabei ist der Begriff des eckigen Verlaufs vor dem Hintergrund und den Möglichkeiten des verwendeten Spulendrahtes zu sehen, so dass diese Ecken noch einen ganz geringen Radius aufweisen können. Dieser sollte aber das ein- bis dreifache des Drahtdurchmessers nicht übersteigen. Weiter innen liegende Spulenwindungen können dann in den Eckbereichen einen stärker abgerundeten Verlauf aufweisen, was für das Wickelverfahren von Vorteil ist.

In Ausgestaltung der Erfindung ist die Induktionsspule etwa 1,5 mal bis 2,5 mal so lang wie die längere kurze Seite. So kann ihre längliche Trapezform schon noch im Wesentlichen angenähert rechteckförmig sein.

In nochmals weiterer vorteilhafter Ausgestaltung der Erfindung ist die Induktionsspule an dem Ende mit der längeren kurzen Seite etwa 1,3 mal bis 2,5 mal so breit wie an dem gegenüberliegenden Ende mit der kürzeren kurzen Seite. So ist die Trapezform einigermaßen ausgeprägt, gleichzeitig ist der Breitenunterschied jedoch noch nicht so groß, dass dadurch sinnvolle Möglichkeiten des Zusammenbaus erschwert wären. Des Weiteren sind so die Winkel in den Eckbereichen und der Verlauf der äußeren Spulenwindungen am schmalen Ende noch einigermaßen günstig für das Wickeln des Spulendrahtes. Von den absoluten Größenverhältnissen her kann die Breite der Induktionsspule im Endbereich mit der längeren kurzen Seite etwa 100 mm bis 200 mm betragen, vorteilhaft etwa 120 mm bis 160 mm. Im anderen Endbereich können es 80 mm bis 160 mm sein, vorteilhaft etwa 90 mm bis 120 mm. Die Länge der Induktionsspule kann zwar 240 mm bis 320 mm betragen, vorteilhaft etwa 250 mm bis 300 mm.

In vorteilhafter Weiterbildung der Erfindung ist ein Mittelbereich der Induktionsspule frei von Spulenwindungen. Zum Einen ist dies allgemein bei Induktionsspulen vorteilhaft wegen der Ausbildung des magnetischen Feldes samt Energieeintrag in einen darüberliegenden Topfboden. Zum Anderen können sowohl Temperaturprobleme verringert werden als auch der Verlauf des Spulendrahtes bzw. der Spulenwindungen optimiert werden, die ansonsten wegen der länglichen Form das magnetische Feld beeinträchtigen würden. Dieser freie Mittelbereich kann etwa ein Fünftel bis ein Drittel der Fläche der Induktionsspule betragen bzw. eine Breite von zumindest einigen Zentimetern aufweisen.

In weiterer Ausgestaltung der Erfindung können an der Induktionsspule bzw. unter der Induktionsspule Ferrite in flacher und langer Stabform angeordnet sein. Derartige Ferrite sind von Induktionsspulen, insbesondere für Induktionsheizeinrichtungen in Kochfeldern, grundsätzlich bekannt. Es hat sich als sehr vorteilhaft herausgestellt, wenn zumindest auch an je einer der Ecken der Trapezform derartige Ferrite angeordnet sind, die sämtliche Spulenwindungen in diesem Bereich überragen, jedoch einen Mittelbereich ähnlich dem vorgenannten Mittelbereich frei lassen. Die Längserstreckung der Ferrite ist dabei quer zur Richtung der Spulenwindungen. Zwischen den an den Ecken angeordneten Ferriten kann entlang der kurzen Seiten noch ein Ferrit vorgesehen sein, entlang der langen Seiten vorteilhaft mehrere.

Als Spulendraht kann ein grundsätzlich bekannter Spulendraht für Induktionsspulen verwendet werden, vorteilhaft aus mehreren Litzen. Der Abstand der einzelnen Spulenwindungen zueinander kann überwiegend sehr gering sein, unter Umständen aber auch bereichsweise etwa größer.

Bei einem erfindungsgemäßen Induktionskochfeld sind mindestens zwei der vorgenannten Induktionsheizeinrichtungen bzw. Induktionsspulen vorgesehen und grenzen dabei derart nahe beieinander bzw. aneinander an, dass die jeweils unterschiedlich langen kurzen Seiten einander gegenüberliegen. Dies bedeutet also, dass jeweils ein größerer und ein kleinerer Endbereich der beiden Induktionsspulen aneinander anliegen. Dabei weisen die Induktionsspulen gleiche Form bzw. gleiche Trapezform auf und sind insbesondere identisch. So kann durch ihre Anordnung eine Rechteckform bzw. eine angenäherte Rechteckform geschaffen werden. Vorteilhaft sind sogar noch mehr solcher identischer Induktionsspulen als Induktionsheizeinrichtungen nebeneinander vorgesehen an dem Induktionskochfeld, beispielsweise drei bis sieben. Dadurch kann die vorbeschriebene angenäherte Rechteckform wieder etwas verlassen werden, was aber nicht stört und im Gegenteil ein Vorteil sein kann. Gleichzeitig kann dadurch eine sehr variable induktiv beheizbare Fläche geschaffen werden, wenn vor allem die Induktionsspulen jeweils einzeln ansteuerbar sind, aber auch für einen Kombinationsbetrieb ausgelegt sind.

Einerseits ist es möglich, dass bei einer ersten Ausgestaltung der Erfindung Ecken der Induktionsspulen jeweils nahezu auf einer Geraden liegen in etwa in Richtung der kurzen Seiten. Dies bedeutet, dass die Ecken quasi direkt nebeneinander liegen und die kurzen Seiten in etwa entlang einer Linie bzw. Gerade verlaufen. Des Weiteren liegen dann die jeweils benachbarten langen Seiten in etwa auf ihrer vollen Länge nebeneinander. Damit kann im Wesentlichen eine Rechteckform bzw. eine Parallelogrammform erreicht werden für die induktiv beheizbare Fläche. Vorteilhaft werden dabei zwei solche Induktionsspulen verwendet und bei Verwendung von drei solcher Induktionsspulen in dieser Anordnung ergibt sich insgesamt wieder eine Trapezform.

Eine zweite Ausgestaltung der Erfindung geht sozusagen aus von der vorbeschriebenen ersten Ausgestaltung, wobei dann die Induktionsspulen gegeneinander wieder etwas verschoben werden und dabei die längeren kurzen Seiten voneinander entfernt werden. Dadurch wird zwar einerseits die vorgenannte eher geschlossene viereckige Fläche etwas verlassen bzw. durchbrochen. Dieses Verschieben beträgt allerdings vorteilhaft nur wenige Zentimeter bzw. 5 % bis 15 % oder maximal 20 % der Länge einer Induktionsspule, so dass die Durchbrechung der vorgenannten Form zum Einen nicht so stark ist und immer noch eine eher zusammenhängende Fläche gegeben ist. Zum Anderen ist es dann sehr gut möglich, neben einem sehr großen Topf durch die gesamte beheizte Fläche mehrere kleinere Töpfe einzeln und unabhängig voneinander zu beheizen, die jeweils schwerpunktmäßig über den breiteren Endbereich der Induktionsspulen angeordnet werden können. Dies ist zwar auch mit kombinierten Induktionskochstellen möglich, die zwei im Wesentlichen kreisrunde Induktionsspulen nahe beieinander anordnen. Bei deren gemeinsamem Betrieb können aber wegen der sich zwangsläufig ergebenden, relativ langgezogenen Gesamtfläche nur längliche Töpfe bzw. Bräter einigermaßen gleichmäßig beheizt werden und keine großen runden Töpfe.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf eine nicht zur Erfindung gehörende Induktionsheizeinrichtung mit Induktionsspule in angenäherter Trapezform,
- Fig. 2: eine Draufsicht auf eine Anordnung von drei Induktionsspulen entsprechend Fig. 1 nebeneinander,
- Fig. 3: eine Ansicht eines erfindungsgemäßen Induktionskochfeldes von oben mit drei Induktionsspulen entsprechend Fig. 2,
- Fig. 4 und 5: mögliche Anordnungen von zwei Induktionsspulen und
- Fig. 6 und 7: mögliche Anordnungen von drei Induktionsspulen nebeneinander.

### Detaillierte Beschreibung der Ausführungsbeispiele

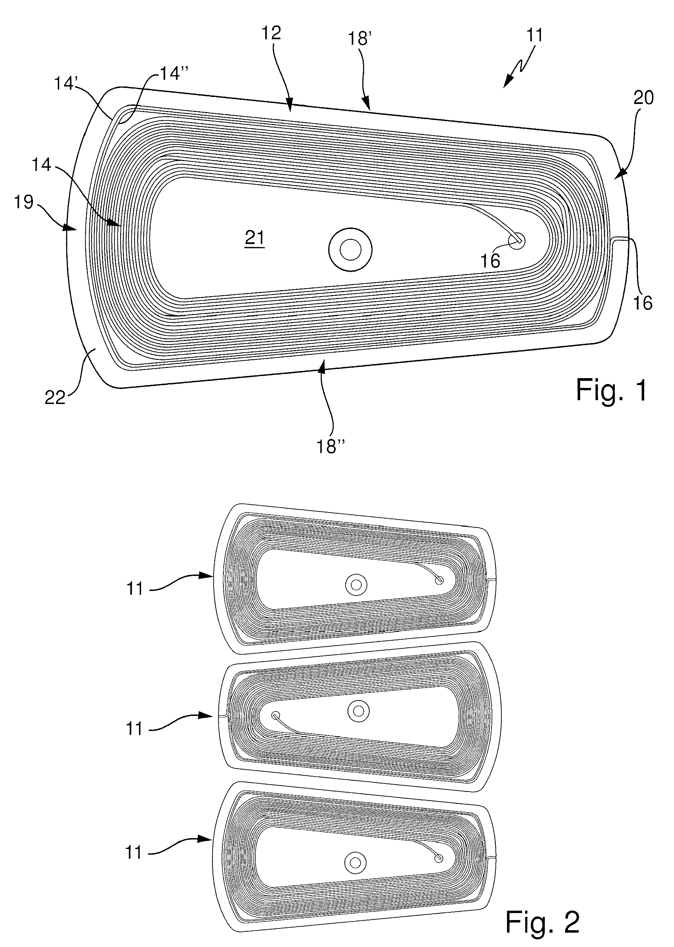

In Fig. 1 ist eine Induktionsheizeinrichtung 11 in Draufsicht dargestellt. Sie weist eine Induktionsspule 12 mit einer Vielzahl von Spulenwindungen auf, in diesem Fall 21 Spulenwindungen 14. Die äußerste Spulenwindung 14' zusammen mit der zweitäußersten Spulenwindung 14" weist erkennbar eine angenäherte Trapezform auf. Sie gibt der Induktionsspule 12 ihre äußere Gestalt mit zwei langen Seiten 18' und 18", die gleich lang sind, sowie einer langen kurzen Seite 19 links und einer kurzen kurzen Seite 20 rechts. Des Weiteren weist die Induktionsspule 12 zwei Anschlüsse 16 auf, einer von rechts kommend an die rechte kurze kurze Seite 20 und einer in einem Mittelbereich 21 nach unten durch einen Träger 22, auf dem die Induktionsspule 12 auf übliche Art und Weise angeordnet ist, insbesondere festgeklebt ist. Des Weiteren ist aus Fig. 1 zu erkennen, dass der Träger 22 einen gleichmäßigen Überstand über die Trapezform bzw. den Verlauf der äußersten Spulenwindung 14' aufweist.

Als Spulendraht für die Induktionsspule 12 kann eine Kupferlitze 90 x 0,2 mm verwendet werden. Der Träger 22 kann aus Glimmer sein mit einer Stärke von etwa 0,4 mm.

Während die langen Seiten 18' und 18" im Wesentlichen ganz gerade sind, sind die kurzen Seiten 19 und 20 etwas nach außen gewölbt. Dies liegt weniger an der Wicklungsart der äußeren Spulenwindungen 14' und 14", sondern vielmehr an derjenigen der weiter innen liegenden. Die Ecken der äußersten beiden Spulenwindungen 14' und 14" zwischen den jeweiligen Seiten sind, wie oben erläutert worden ist, relativ spitz bzw. winklig ausgeformt. Sie weisen hier auch einen kleinen Abstand bzw. Zwischenraum zu den weiter innen liegenden Spulenwindungen 14 auf, da diese aufgrund von vereinfachten Wickeln weniger eckig ausgebildet sind. Die äußere Trapezform findet sich auch im Wesentlichen im Mittelbereich 21 wieder bis auf die stärker abgerundeten Ecken und, weil dieser Mittelbereich 21 relativ schmal ist, ist die linke kurze kurze Seite nur noch eine großzügige Rundung.

Die Länge der Induktionsspule 12 kann etwa 25 cm betragen und dementsprechend die Länge der linken langen kurzen Seite 19 etwa 13 cm und die der rechten kurzen kurzen Seite 20 etwa 9 cm. Der Mittelbereich 21 kann dann an der Seite 19 eine Höhe von mindestens 2 cm haben. Die Nennleistung der Induktionsspule kann 1,4 kW betragen, ihre kurzzeitige Boost-Leistung 2,1 kW.

In der Fig. 2 ist in Draufsicht eine Anordnung von drei gleichen Induktionsspulen 11 dargestellt, die jeweils um 180 ° verdreht zueinander mit ihren langen Seiten 18 aneinander liegen bzw. die Träger 22 liegen parallel zueinander und mit 1 cm bis 2 cm Abstand nebeneinander, so dass auch die jeweils äußersten Spulenwindungen parallel zueinander verlaufen. So lässt sich eine sogenannte induktiv beheizte Flächenzone bilden. Damit können entweder, wie eingangs erläutert, große sogenannte Bräter beheizt werden oder kleine Töpfe, was nachher noch näher erläutert wird.

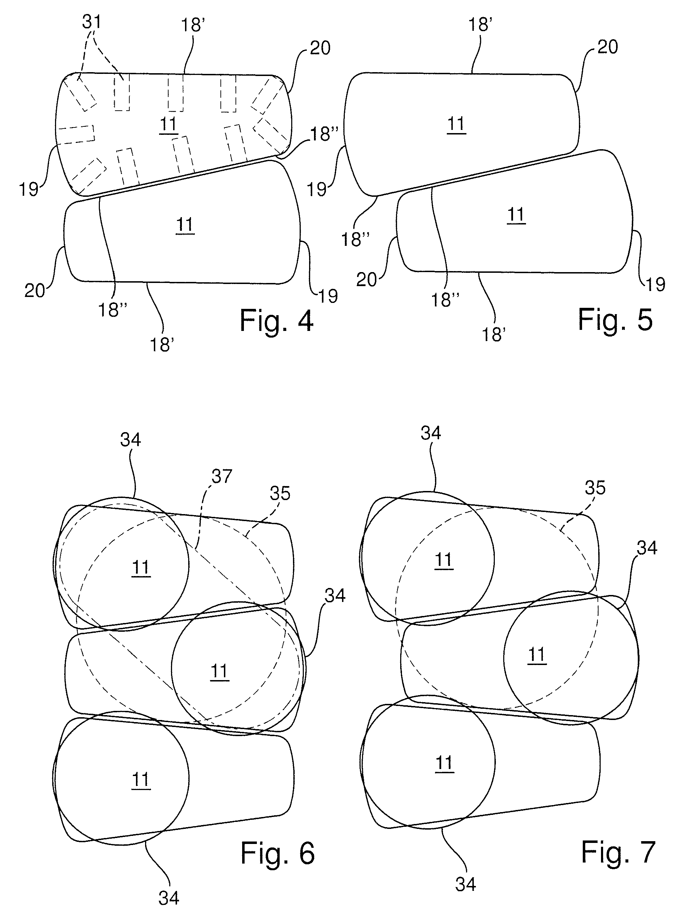

Diese Anordnung der Fig. 2, die im Übrigen auch prinzipiell derjenigen der Fig. 6 entspricht, ist so ausgebildet, dass die jeweiligen kurzen Seiten aller drei Induktionsspulen 11 in etwa auf einer Linie liegen bzw. nicht zueinander versetzt sind. Alternativ können allgemein auch mehrere Induktionsspulen quasi gleichsinnig nebeneinander angeordnet werden mit den langen kurzen Seiten aneinander anschließend, also eine Art Teilkreis oder sogar Halbkreis ergeben. Andere Beispiele werden nachfolgend noch näher erläutert.

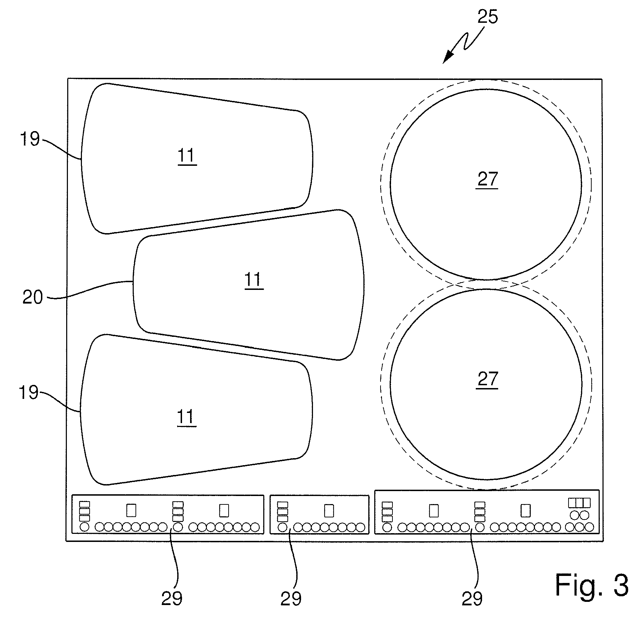

In Fig. 3 ist ein erfindungsgemäßes Induktionskochfeld 25 dargestellt mit drei Induktionsheizeinrichtungen 11 entsprechend Fig. 1 im linken Bereich und zwei kreisrunden Induktionsheizeinrichtungen 27 im rechten Bereich. Darunter sind jeweils Steuerungen 29 mit Bedienelementen für die Ansteuerung der jeweiligen Induktionsheizeinrichtungen 11 bzw. 27 auf an sich bekannte Art und Weise angeordnet, so dass darauf nicht näher eingegangen werden muss.

Es ist bei den drei Induktionsheizeinrichtungen 11 im linken Bereich zu erkennen, dass sie, anders als in Fig. 2, etwas versetzt zueinander sind bzw. auseinander gezogen sind. Dies bedeutet, dass die kurze kurze Seite 20 der mittleren Induktionsheizeinrichtung 11 deutlich rechts von der Geraden durch die beiden langen kurzen Seiten 19 der oberen und der unteren Induktionsheizeinrichtung 11 verläuft. Durch diesen Versatz ergeben sich später zu Fig. 7 noch näher erläuterte Möglichkeiten zur Anordnung von mehreren bzw. verschiedenen Töpfen darauf.

Durch nicht näher dargestellte Verschaltung kann mittels der Steuerungen 29 ein Betrieb der Induktionsheizeinrichtungen 11 entweder jeweils ganz alleine erfolgen oder aber in Kombination, beispielsweise die oberen beiden oder die unteren beiden Induktionsheizeinrichtungen 11 gemeinsam.

Als Leistungselektronik reicht es für eine derartige Anordnung von drei erfindungsgemäßen Induktionsheizeinrichtungen 11 nebeneinander und zwei Induktionsheizeinrichtungen 27 separat davon aus, einen Vierfach-Generator und einen Zusatzumrichter vorzusehen, der einen Umrichter ohne eigenes Netzfilter ist, um sie alle zu betreiben. Die Abmessungen des Induktionskochfelds 25 entsprechend dabei denjenigen eines üblichen 60 cm-Kochfeldes, d.h. dass das Induktionskochfeld 25 etwa 60 cm breit ist und etwas über 50 cm tief ist.

In Fig. 4 ist dargestellt, wie zwei Induktionsheizeinrichtungen 11 entsprechend Fig. 1 jeweils 180 ° versetzt zueinander nebeneinander angeordnet werden können. Dies erfolgt dabei entsprechend dem Grundsatz der Fig. 2, was bedeutet, dass die lange kurze Seite 19 der oberen Induktionsheizeinrichtung 11 und die kurze kurze Seite 20 der unteren Induktionsheizeinrichtung 11 in etwa auf einer Geraden liegen bzw. die Ecken 19/18' und 18'/20 der oberen Induktionsheizeinrichtung 11 relativ nahe bei den Ecken 20/18' und 18'/19 der unteren Induktionsheizeinrichtung 11 liegen. So ergibt sich eine relativ kompakte rechteckige Gesamtfläche.

In Fig. 4 ist im übrigen auch dargestellt, wie entlang einer Induktionsheizeinrichtung 11 bzw. ihre Induktionsspule mehrere Ferrite 31 angeordnet sein können. Dabei sind jeweils über den Ecken der Induktionsspule der Induktionsheizeinrichtung 11 ein Ferrit 31 angeordnet, ein Ferrit 31 mittig über der langen kurzen Seite 19 und jeweils drei Ferrite entlang der langen Seiten 18' und 18". Die Ferrite 31 über den Ecken haben eine Länge von 56 mm und die anderen von 45 mm. Die Breite kann 15 mm betragen und die Dicke 5 mm.

In der Fig. 5 ist eine Anordnung von zwei Induktionsheizeinrichtungen 11 ähnlich Fig. 4 dargestellt, die allerdings seitlich etwas auseinander gezogen sind. Im Vergleich zu der Anordnung aus Fig. 4 ist die obere Induktionsheizeinrichtung 11 einige Zentimeter nach links gezogen, so dass die Ecken nicht mehr wie bei Fig. 4 nahe beieinander liegen. Bei einer solchen Anordnung können zwar große runde Töpfer weniger gut bzw. weniger gleichmäßig beheizt werden als bei einer entsprechend Fig. 4. Andererseits können damit längliche Bräter besser beheizt werden und kleine Töpfe, wobei die kleinen Töpfe jeweils über den breiteren Bereich der Induktionsheizeinrichtungen 11 aufgesetzt werden. Näheres zu solchen Möglichkeiten wird im Folgenden anhand der Fig. 6 und 7 erläutert.

In der Fig. 6 ist eine Anordnung von drei Induktionsheizeinrichtungen 11 entsprechend Fig. 2 dargestellt. Hier liegen wieder links und rechts die jeweils kurzen Seiten in etwa auf einer Geraden. Durch zwei durchgezogen gezeichnete kleine Topfkreise 34 ist dargestellt, wie einzelne kleine Töpfe mit einem Durchmesser von 145 mm über jeweils einer der Induktionsheizeinrichtungen 11 beheizt werden können. Dabei können die Induktionsspulen der Induktionsheizeinrichtungen 11 jeweils nach Belieben einzeln angesteuert werden.

Ein großer Topfkreis 35 ist gestrichelt dargestellt und stellt einen großen Topf mit einem Durchmesser von 210 mm dar. Dieser kann durch die Induktionsspulen der beiden oberen Induktionsheizeinrichtungen 11 gemeinsam beheizt werden, während auf der untersten Induktionsheizeinrichtung 11 ein kleiner Topf separat davon beheizt werden kann.

Stichpunktiert dargestellt ist ein ovaler Bräterkreis 37, der einen Bräter mit Länge von etwa 250 mm und Breite von etwa 150 mm darstellt. Er kann genauso wie der große Topf über den oberen beiden Induktionsheizeinrichtungen 11 im gemeinsamen Betrieb beheizt werden. Für noch größere, hier nicht dargestellte Bräter können alle Induktionsspulen aller drei Induktionsheizeinrichtungen 11 gemeinsam betrieben werden.

Bei der Anordnung der Fig. 7, welche grundsätzlich derjenigen der Fig. 3 entspricht, sind die drei Induktionsheizeinrichtungen 11 wieder stärker zueinander versetzt. Hier können kleine Töpfe entsprechend der durchgezogen dargestellten kleinen Topfkreise 34 besser beheizt werden, weil sie etwas weiter voneinander beabstandet sind und somit besser gehandhabt werden können. Allerdings steht der strichliert dargestellte große Topfkreis 35 an einigen Stellen ungünstig über. Ein Bräter entsprechend dem ovalen Bräterkreis 37 wiederum kann genauso gut oder sogar noch etwas besser beheizt werden.

## Patentansprüche

1. Induktionskochfeld (25) mit mindestens zwei Induktionsspulen (12), wobei jede Induktionsspule (12) flach und in einer Ebene ausgebildet ist und mehrere umlaufende Spulenwindungen (14,14',14") aus Spulendraht aufweist, wobei die Außenkontur der Induktionsspule (12) bzw. der äußersten Spulenwindung (14',14") angenähert trapezförmig ist mit zwei gegenüberliegenden gleich langen Seiten (18',18"), und mit zwei unterschiedlich langen kurzen Seiten (19,20) dazwischen, wobei die Induktionsspulen (12) nahe beieinander und aneinander angrenzend angeordnet sind, **dadurch gekennzeichnet, dass** die jeweils unterschiedlich langen kurzen Seiten (19,20) der beiden Induktionsspulen (12) einander gegenüberliegen.

2. Induktionskochfeld (25) nach Anspruch 1, **dadurch gekennzeichnet, dass** jeweils Ecken der Induktionsspulen (12) nahezu auf einer Geraden liegen in etwa in Richtung der kurzen Seiten (19,20).

3. Induktionskochfeld (25) nach Anspruch 1, **dadurch gekennzeichnet, dass** die Induktionsheizeinrichtungen (11) bzw. Induktionsspulen (12) versetzt zueinander angeordnet sind durch Verschieben gegeneinander mit parallel gehaltenen langen Seiten, die nahe beieinander verlaufen, wobei vorzugsweise ein Verschieben derart ist, dass die längeren kurzen Seiten (19) weiter voneinander entfernt werden.

4. Induktionskochfeld (25) nach einem der vorhergehenden Ansprüche, **dadurch gekennzeichnet, dass** die zwei gegenüberliegenden langen Seiten (18',18") gerade ausgebildet sind.

5. Induktionskochfeld (25) nach einem der vorhergehenden Ansprüche, **dadurch gekennzeichnet, dass** die zwei unterschiedlich langen kurzen Seiten (19,20) leicht nach außen gewölbt sind.

6. Induktionskochfeld (25) nach einem der vorhergehenden Ansprüche, **dadurch gekennzeichnet, dass** die Induktionsspule (12) spiegelsymmetrisch ausgebildet ist zu einer Spiegelachse, die zwischen den beiden langen Seiten (18',18") der Induktionsspule (12) verläuft.

7. Induktionskochfeld (25) nach einem der vorhergehenden Ansprüche, **dadurch gekennzeichnet, dass** mindestens eine, vorzugsweise mindestens zwei, Spulenwindungen (14',14") einen eckigen Verlauf im Bereich der Ecken der Trapezform aufweisen, vorzugsweise die äußersten Spulenwindungen (14',14"), wobei insbesondere weitere innen liegende Spulenwindungen einen abgerundeten Verlauf haben.

8. Induktionskochfeld (25) nach einem der vorhergehenden Ansprüche, **dadurch gekennzeichnet, dass** die Induktionsspule (12) etwa 1,5 mal bis 2,5 mal so lang ist wie die längere kurze Seite (19).

9. Induktionskochfeld (25) nach einem der vorhergehenden Ansprüche, **dadurch gekennzeichnet, dass** die Induktionsspule (12) an dem Ende mit der längeren kurzen Seite (19) 1,3 mal bis 2,5 mal so breit ist wie an dem Ende mit der kürzeren kurzen Seite (20).

10. Induktionskochfeld (25) nach einem der vorhergehenden Ansprüche, **dadurch gekennzeichnet, dass** ein Mittelbereich (21) der Induktionsspule (12) frei ist von Spulenwindungen, und insbesondere etwa ein Drittel der Fläche der Induktionsspule (12) frei ist.

11. Induktionskochfeld (25) nach einem der vorhergehenden Ansprüche, **dadurch gekennzeichnet, dass** an der Induktionsspule (12) Ferrite (31) in flacher und langer Stabform angeordnet sind, vorzugsweise jeweils ein Ferrit (31) über einer der Ecken der Trapezform und insbesondere mit Längserstreckung quer zur Richtung der Spulenwindungen (14,14',14").

## Claims

1. Induction hob (25) having at least two induction coils (12), wherein each induction coil (12) is flat and of planar design and has a plurality of circumferential coil turns (14, 14', 14") made of coil wire, wherein the outer contour of the induction coil (12) or of an outermost coil turn (14', 14") is approximately trapezoidal having two long sides (18', 18") of equal length which are situated opposite one another, and having two short sides (19, 20) of differing length between said long sides of equal length, wherein the induction coils (12) are arranged close together and adjoining one another, **characterized in that** the short sides (19, 20), which are each of different lengths, of the two induction coils (12) are situated opposite one another.

2. Induction hob (25) according to claim 1, **characterized in that** corners of the induction coils (12) are in each case situated almost on a straight line approximately in the direction of the short sides (19, 20).

3. Induction hob (25) according to claim 1, **characterized in that** the induction heating devices (11) or induction coils (12) are arranged offset with respect to one another by being displaced with respect to one another with the long sides, which run close together, being kept parallel, wherein preferably displacing is such that the longer short sides (19) are moved further away from one another.

4. Induction hob (25) according to any of the preceding claims, **characterized in that** the two opposite long sides (18', 18") are straight.

5. Induction hob (25) according to any of the preceding claims, **characterized in that** the two short sides (19, 20) of differing length are slightly curved outwards.

6. Induction hob (25) according to any of the preceding claims, **characterized in that** the induction coil (12) is designed with mirror-image symmetry with respect to a mirror axis which runs between the two long sides (18', 18") of the induction coil (12).

7. Induction hob (25) according to any of the preceding claims, **characterized in that** at least one, preferably at least two, coil turns (14', 14") have an angular profile in the region of the corners of the trapezoidal shape, preferably the outermost coil turns (14', 14"), wherein in particular further inside situated coil turns have a rounded profile.

8. Induction hob (25) according to any of the preceding claims, **characterized in that** the induction coil (12) is approximately 1.5 times to 2.5 times as long as the longer short side (19).

9. Induction hob (25) according to any of the preceding claims, **characterized in that** the induction coil (12) at that end with the longer short side (19) is 1.3 times to 2.5 times as wide as at that end with the shorter short side (20).

10. Induction hob (25) according to any of the preceding claims, **characterized in that** a central region (21) of the induction coil (12) is free of coil turns, and in particular about one third of the surface area of the induction coil (12) is free.

11. Induction hob (25) according to any of the preceding claims, **characterized in that** ferrites (31) in the form of a flat and long rod are arranged on the induction coil (12), preferably in each case one ferrite (31) over one of the corners of the trapezoidal shape and, in particular, with a longitudinal extent transverse to the direction of the coil turns (14, 14', 14").

## Revendications

1. Champ de cuisson à induction (25) comportant au moins deux bobines d'induction (12), dans lequel chaque bobine d'induction (12) est de forme plate et disposée dans un plan et présente plusieurs spires de bobine enroulées (14, 14', 14") en fil de bobine, dans lequel le contour extérieur de la bobine d'induction (12) ou de la spire de bobine extérieure (14', 14") est de forme approximativement trapézoïdale avec deux côtés opposés de même longueur (18', 18"), et avec entre ceux-ci deux côtés courts de longueur différente (19, 20), dans lequel les bobines d'induction (12) sont disposées à proximité l'une de l'autre et en position adjacente l'une à l'autre, **caractérisé en ce que** les côtés courts de longueur respectivement différente (19, 20) des deux bobines d'induction (12) sont en face l'un de l'autre.

2. Champ de cuisson à induction (25) selon la revendication 1, **caractérisé en ce que** des angles des bobines d'induction (12) sont respectivement situés pratiquement sur une droite sensiblement dans la direction des côtés courts (19, 20).

3. Champ de cuisson à induction (25) selon la revendication 1, **caractérisé en ce que** les dispositifs de chauffage à induction (11) ou les bobines d'induction (12) sont disposé(e)s en position décalée entre eux/elles par déplacement l'un(e) par rapport à l'autre avec maintien en position parallèle des longs côtés qui s'étendent à proximité l'un de l'autre, dans lequel un déplacement est de préférence tel que les côtés courts plus longs (19) soient plus écartés l'un de l'autre.

4. Champ de cuisson par induction (25) selon l'une quelconque des revendications précédentes, **caractérisé en ce que** les deux longs côtés opposés (18', 18") sont rectilignes.

5. Champ de cuisson par induction (25) selon l'une quelconque des revendications précédentes, **caractérisé en ce que** les deux côtés courts de longueur différente (19, 20) sont légèrement incurvés vers l'extérieur.

6. Champ de cuisson par induction (25) selon l'une quelconque des revendications précédentes, **caractérisé en ce que** la bobine d'induction (12) présente la symétrie de réflexion par rapport à un axe de réflexion, qui s'étend entre les deux longs côtés (18', 18") de la bobine d'induction (12).

7. Champ de cuisson par induction (25) selon l'une quelconque des revendications précédentes, **caractérisé en ce qu'**au moins une, de préférence au moins deux, spire(s) de bobine (14', 14") présente(nt) une allure polygonale dans la région des angles de la forme trapézoïdale, de préférence les spires de bobine extérieures (14', 14"), dans lequel en particulier d'autres spires de bobine situées à l'intérieur ont une allure arrondie.

8. Champ de cuisson par induction (25) selon l'une quelconque des revendications précédentes, **caractérisé en ce que** la bobine d'induction (12) est environ 1,5 fois à 2,5 fois plus longue que le plus long côté court (19) .

9. Champ de cuisson par induction (25) selon l'une quelconque des revendications précédentes, **caractérisé en ce que** la bobine d'induction (12) est 1,3 fois à 2,5 fois plus large à son extrémité avec le plus long côté court (19) qu'à son extrémité avec le plus court côté court (20).

10. Champ de cuisson par induction (25) selon l'une quelconque des revendications précédentes, **caractérisé en ce qu'**une région centrale (21) de la bobine d'induction (12) est libre de spires de bobine, et en particulier environ un tiers de la surface de la bobine d'induction (12) est libre.

11. Champ de cuisson par induction (25) selon l'une quelconque des revendications précédentes, **caractérisé en ce que** des ferrites (31) en forme de barreau plat et long sont disposées sur la bobine d'induction (12), de préférence chaque fois une ferrite (31) sur un des angles de la forme trapézoïdale et en particulier avec son extension longitudinale perpendiculaire à la direction des spires de bobine (14, 14', 14").
